# EUROPEAN PATENT SPECIFICATION

(11) **EP 0 348 073 B1**
(45) Date of publication and mention of the grant of the patent: **21.04.1993**
(21) Application number: 89305771.1
(22) Date of filing: 07.06.1989
(51) Int. Cl.: B60J 7/057

(54) **Opening roof for a motor vehicle**
Schiebedach für Kraftfahrzeuge
Toit ouvrant pour véhicule automobile

(30) Priority: 18.06.1988 GB 8814533; 10.12.1988 GB 8828913
(43) Date of publication of application: 27.12.1989
(60) Divisional application: 92202892.3
(73) Proprietor: BRITAX LIMITED, Yardley, Birmingham B25 8BB (GB)
(72) Inventor: Douglas, James Cunningham, Horndean Portsmouth Hampshire (GB)
(74) Representative: Hollinghurst, Antony

(56) References cited:
- DE-C- 852 660
- GB-A- 2 161 439

## Description

This invention relates to an opening roof for a motor vehicle of the type in which the front part of an opening in the vehicle roof is covered by a front panel which has side flanges extending downwardly from its side edges and is openable by pivoting upwardly about its front edge and the rest of the opening is covered by a rear panel which has side flanges extending downwardly from its side edges and is openable by sliding, to a position behind the opening, along a pair of tracks located on opposite sides of the opening. An opening roof of this type is disclosed in GB-A-2161439.

According to the invention, in an opening roof of the foregoing type, a water check flange is secured to the vehicle roof so as to surround the entire periphery of the opening, side flanges on the front panel are part of a main flange extending downwardly from its front and side edges so as to be below the top of the water check flange when the front panel is in its closed position, the side flanges on the rear panel are part of a main flange extending downwardly from its side and rear edges so as to project outside and below the top of the water check flange, a front flange projects downwardly from the front edge of the rear panel to a depth less than the depth of the main flange of the rear panel so as to extend over the water check flange adjacent to each front corner of the rear panel, an upwardly facing U-shaped channel is formed on the bottom edge of the front flange of the rear panel, and a rear flange extends downwardly from the rear edge of the front panel to a depth less than the depth of the main flange of the front panel so that said rear flange is received in the U-shaped channel when both panels are in their closed positions.

With this arrangement, any water running off the front and sides of the front panel or the sides and rear of the main panel is deposited on the vehicle roof outside the water check flange. Any water running into the join between the two panels is collected by the U-shaped channel and is discharged from the ends thereof outside the water check flange. Consequently no seals are required to prevent rainwater leaking into the interior of the vehicle when the panels are closed.

The tracks may be mounted on the vehicle roof laterally outside the water check flange.

Each of the tracks may support means for opening the panels comprising a drive member movable along the track, a first link coupled to means operative to open the front panel as it slides along the track and having a first coupling formation at its rear end movable between a first position in which it engages with a locking formation on the track and a second position in which:it engages with the drive means, and a second link coupled to slide along the track with the rear panel and having a second coupling formation at its front end movable between a first position in which it engages with a locking formation on the track and a second position in which it engages with the drive means, the first and second coupling formations being so shaped that the first coupling formation is disengaged from the drive member and engaged with its locking formation and the second coupling formation is disengaged from the drive member and engaged with its locking formation during rearward movement of the drive member, and the first coupling formation is disengaged from its locking formation and engaged with the drive member and the second coupling formation is disengaged from its locking formation and engaged with the drive member during forward movement of the drive member.

Preferably the second link has a ramp on its front end arranged to engage with the drive member to retain the second coupling formation in engagement with said locking formation when the drive member is in front of the locking formation.

If it is desired that the front panel should reach its fully open position before commencement of the opening movement of the rear panel, a single locking formation is provided on the track and the first coupling formation is arranged to move out of engagement with the drive means simultaneously with movement of the second coupling formation into engagement therewith.

The means operative to open the front panel may comprise a strut having one end pivotally connected to the panel and having a first pivot formation at its other end engaging in an arcuate slot in a side wall of the first link and a second pivot formation intermediate between the ends of the strut engaging in the arcuate slot so as to be at the front of the slot when the first panel is in its closed position, rearward movement of the first link causing the pivot formations to move along the arcuate slot thereby pivoting the strut relative to the track so as to raise the rear edge of the panel, the arcuate slot having an upwardly extending branch slot aligned with the position of the second pivot formation when the first pivot formation is at the front end of the arcuate slot, the branch slot permitting the second pivot formation to disengage from the arcuate slot as continued rearward movement of the first link causes continued pivotal movement of the strut about the first pivot formation.

Preferably, the strut has a cam formation adjacent to the first pivot formation arranged to engage with a complementary formation on the first link to retain the first pivot formation at the front end of the arcuate slot when the second pivot formation is disengaged from both the arcuate slot and the branch slot.

Embodiments of the invention will now be described, by way of example, with reference to the accompanying drawings, in which:
Figure 1 is a perspective view of the upper part of a motor car fitted with an opening roof in accordance with an embodiment of the invention;
Figure 2 is a perspective view, similar to Figure 1 but with both of the opening panels removed;
Figure 3 is a cross-sectional view taken on the line 3 - 3 in Figure 1;
Figure 4 is a cross-sectional view, similar to Figure 3, but with the panels in their open positions;
Figure 5 is a cross-sectional view taken on the line 5 - 5 in Figure 1;
Figure 6 is a cross-sectional view, similar to Figure 3, of another embodiment of the invention;
Figure 7 is a cross-sectional view, similar to Figure 6, but with the front panel in its open position;
Figure 8 is a cross-sectional view taken on the line 8 - 8 in Figure 7, and showing the section line 7 - 7 of Figure 7;
Figure 9 is a cross-sectional view, similar to Figure 6, but with both panels in their open positions; and
Figure 10 is an exploded perspective view of some of the components of the embodiment illustrated in Figures 5 to 9.

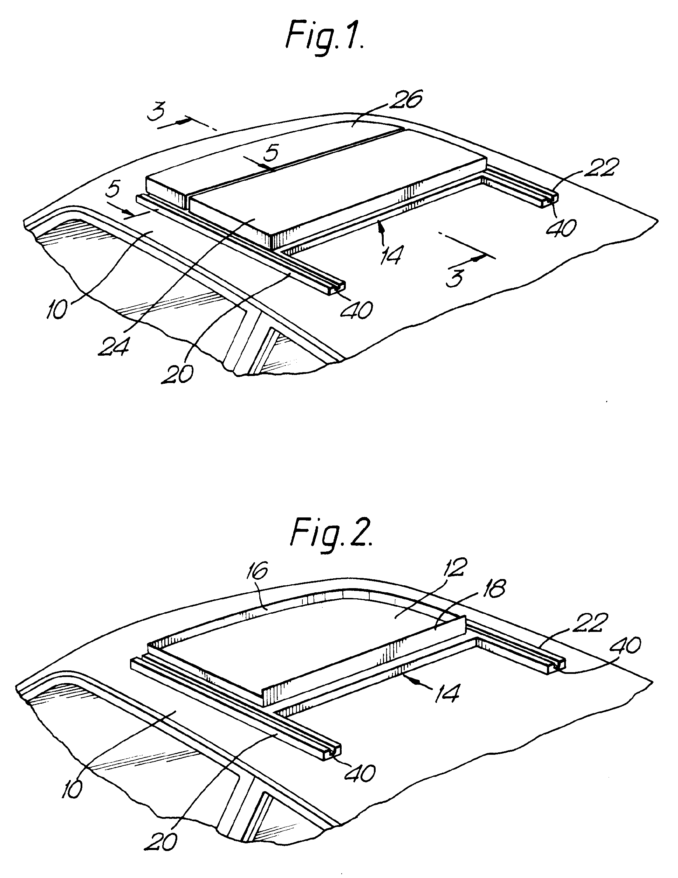

Referring to Figures 1 and 2, the roof 10 of a motor car contains an opening 12 surrounded by a frame 14. The frame 14 has an upwardly extending water check flange 16 extending around the entire periphery of the opening, the portion 18 of the flange 16 extending along the rear edge of the opening being higher than the rest of the flange 16. The frame 14 also includes a pair of slide tracks 20 and 22 each extending along a respective side of the opening and also projecting behind the opening 12. A rear panel 24 is slidably mounted on the tracks 20 and 22 and a front panel 26 is pivotally mounted on the part of the flange 16 extending along the front edge of the opening.

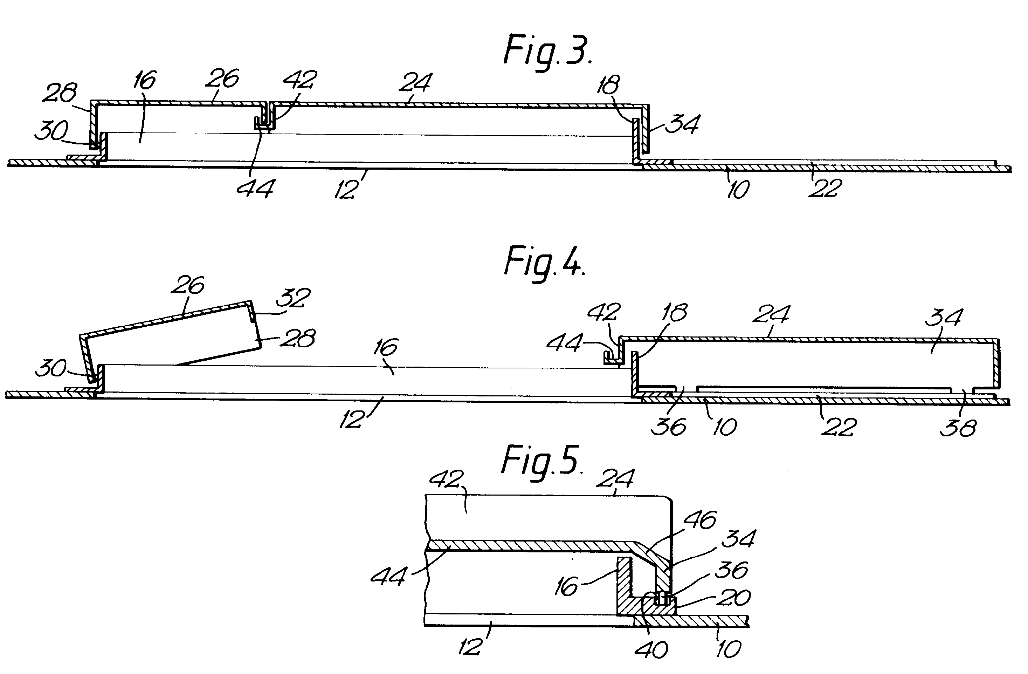

Referring now to Figures 3 and 4, the front and side edges of the front panel 26 carry a downwardly extending main flange 28. A hinge 30 connects the bottom edge of the part of the flange 28 extending along the front of the panel 26 to the corresponding part of the water check flange 16. A rear flange 32 extends downwardly from the rear edge of the front panel 26 to a depth of approximately half that of the main flange 28.

The rear panel 24 has a main flange 34 extending downwardly from its side and rear edges to a depth substantially equal to the depth of the main flange 28 of the front panel 26. The side portions of the flange 34 carry respective and rear guide shoes 36 and 38 which engage in channels 40 in the tracks 20 and 22 respectively (see Figure 5). Although the shoes 36 and 38 are shown as merely resting in the groove 40, it should be understood that interlocking formations of known type are provided to prevent the panel 25 from being lifted vertically away from the tracks 20 and 22.

A front flange 42 extends downwardly from the front edge of the rear panel 24 to a depth such that its bottom edge is above the level of the side portions of the water check flange 16 but below the level of the rear portion 18 thereof. An upwardly facing U-shaped channel 44 is formed on the bottom edge of the front flange 42. As can be seen from Figure 5, its end sections 46, outside the water check flange 16, slope downwardly so as to facilitate drainage of water therefrom. When both panels 24 and 26 are in their closed positions, as illustrated in Figure 3, the bottom edge of the rear flange 42 on the front panel 26 is received within the channel 44.

When it is desired to open the roof, the front panel 26 is first pivoted upwardly at least sufficiently to disengage its rear flange 32 from the channel 44. The rear panel 24 can then be moved rearwardly to the extent desired, the rearward limit of its range of movement being defined by engagement of its front flange 42 with the higher rear part 18 of the water check flange 16.

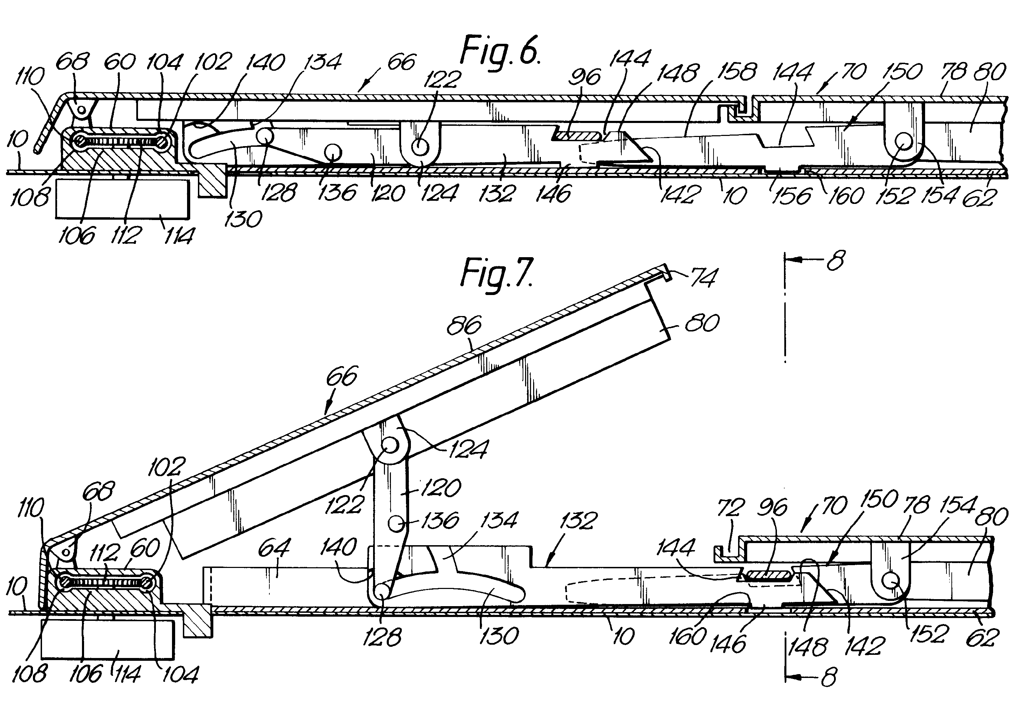

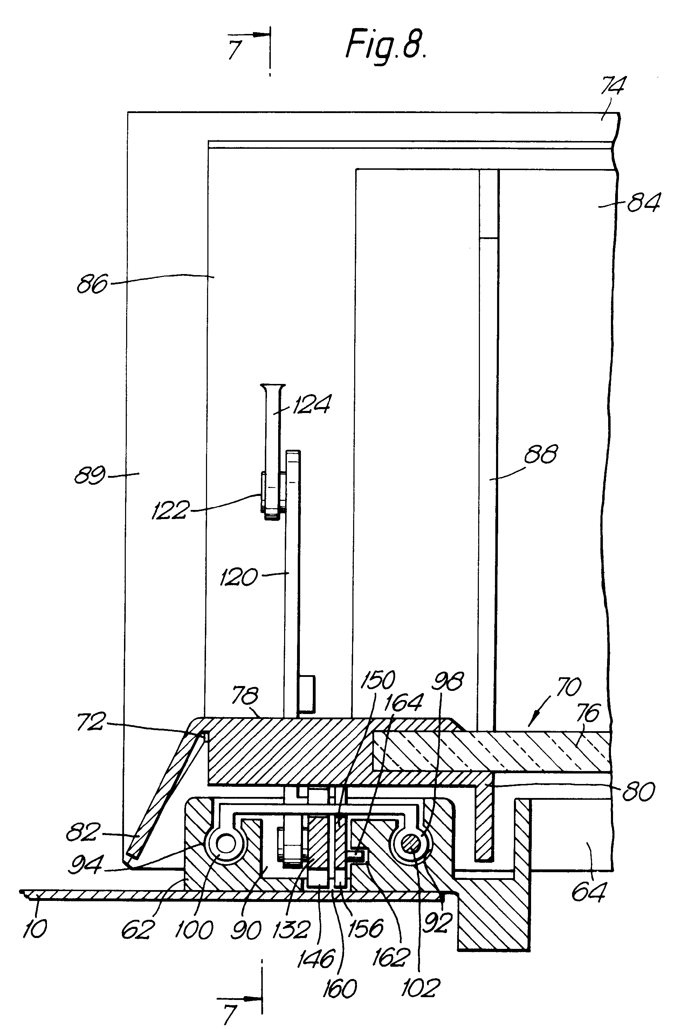

Figures 6 to 10 illustrate another embodiment of the invention in which the opening 12 in the roof 10 of the motor car shown in Figures 1 and 2 is surrounded by a frame including a front member 60 (Figure 6) and a pair of side members 62 (Figure 8). The frame includes an upwardly extending water check flange 64, similar to the flange 16 of Figures 1 to 5.

The opening in the vehicle roof is closed by a front panel 66 which is mounted on the front frame member 60 by means of a hinge 68, and a rear panel 70 which is slidably mounted on the side members 62 in a manner to be described hereinafter. A drainage channel 72 extends across the front edge of the rear panel 20 and interlocks with a downwardly extending flange 74 on the rear edge of the front panel 66. The channel 72 discharges outside the water check flange 64, the arrangement thus being similar to that provided by the channel 44 illustrated in Figures 1 to 5.

Referring particularly to Figure 8, the rear panel 70 comprises a glass pane 76 mounted in a metal or plastics frame 78. The drainage panel 72 is formed integrally with the front part of the frame 78 while the side and rear parts thereof include a downwardly projecting flange 80 which is located outside the water check flange 64 and a downwardly inclined outer flange 82 which is located outside the frame bounding the opening in the vehicle roof 10. Similarly, the front panel 66 consists of a glass pane 84 mounted in a metal or plastics frame 86. The flange 74 is formed integrally with the rear edge of the frame 86 while the front and side edges thereof carry a downwardly extending flange 88 which is located outside the water check flange 64, and an outwardly inclined flange 89 similar to the flange 82 on the rear panel 70.

As illustrated in Figure 8, each of the side members 62 of the frame has a central open-topped channel 90 of rectangular cross-section and inner and outer side channels 92 and 94, each of which has a bottom part of circular cross-section together with a slot of width less than the diameter of the bottom part communicating with the top of the rail. A drive member 96 has a rectangular central part extending transversely across the track 62 together with respective end limbs projecting downwardly into the grooves 92 and 94 with respective cylindrical formations 98 and 100 on their lower ends. In the track 62 on the left hand side of the opening (illustrated in Figure 8), the cylindrical formation 98 in the inner groove 92 is clamped onto a drive cable 102 which extends along the inner groove 92 and a corresponding channel 104 of circular cross-section formed at the inner end of a closed channel in the front frame member 60. The channel 106 also has an outer end portion 108 of circular cross-section containing a second drive cable 110 which extends across the front of the roof opening and then down the outer groove 100 in the frame member 62 on the right hand side of the opening where it is engaged by the cylindrical formation 100 on the outer end of the corresponding drive bar 96. In all other respects, the two side members 62 and their associated mechanisms are symmetrical about the longitudinal centre line of the car.

At a central location on the front frame member 60, the channel 106 accommodates a sprocket 112, the teeth of which engage with complementary formations on the drive cables 102 and 110. A drive knob 114, located within the vehicle, is rotationally coupled to the sprocket 112. Rotation of the knob 114 therefore causes the cables 102 and 110 to move in opposite directions across the front opening and consequently in the same direction down the sides thereof, thus moving the two drive members 96 in unison with each other.

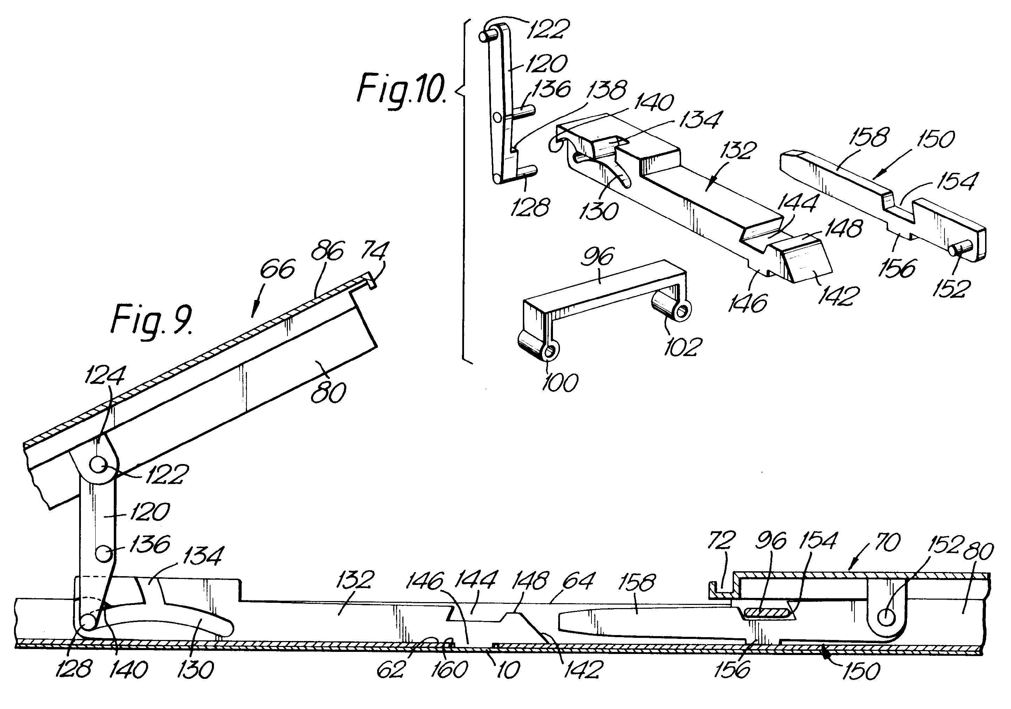

As can be most clearly seen in Figures 7 and 10, the mechanism coupling the drive member 96 to the front panel 86 comprises a strut 120 which is connected by a pivot pin 122 to a bracket 124 secured to the underside of the frame 86 of the front panel 66. At its other end, the strut 120 has a second pivot pin 128 which engages in a main arcuate slot 130 in a first link 132. The arcuate slot 130 has a branch slot 134, also of arcuate shape centred on the front end of the slot 130. A third pin 136 projects from one side of the strut 120 at the same distance from the pivot pin 128 as the radius of the branch slot 134. When the strut is pivoted downwardly about the pin 128 so that the pin 136 passes along the branch slot 134 into the main slot 130, the two pins 128 and 136 are free to slide along the main slot 130 but pivotal movement of the strut 120 relative to the first link 132 is restricted to that dictated by the shape of the main slot 130.

When the pivot pin 128 is at the front end of the main slot 130, the strut 120 can pivot thereabout, moving the pin first along and then out of the branch slot 134. The pivot pin 128 is retained at the front of the slot 130 when the pin 136 is clear of the slot 130 first by engagement of the pin 136 with the walls of the branch slot 134 and then, after the pin 136 has moved clear of the branch slot 134, by inter-engagement of a convex cam formation 138 on the side of the strut 120 with a concave cam formation 140 on the side of the first link 132.

At its rear end, the link 132 has a ramp 142. A recess 144 is formed in the top surface of the link 132 in front of the ramp 142. The walls of the recess 144 are sloped in the opposite direction to the ramp 142. The link 132 has a projection 146 on its bottom surface in alignment with the recess 144. The top surface 148 of the part of the link 132 behind the recess 144 is lower than the top surface immediately in front of this recess, this difference in height, the depth of the recess 144 below the surface 148 and the height of the projection 146 all being substantially equal to the thickness of the rectangular part of the drive member 96.

A second link 150 couples the drive member 96 to the rear panel 70 via a pivot pin 152 which engages in a bracket 154 secured to the frame 78. In front of the pivot pin 152, the second link 150 has a recess 154 in its upper surface and a projection 156 on its lower surface which are similar to the projection 144 and recess 146 of the first link 132 except that the walls of the recess 154 slope in the opposite direction. The top surface of the portion 158 of the second link 150 located in front of the recess 154 is lower than the top surface behind such recess by an amount equal to the thickness of the transverse part of the drive member 96. The thickness of the portion 148 of the first link 132 and the portion 158 of the second link 150 is such that there is room for the drive bar to pass thereabove only when the projections 146, 156 respectively are received in the cut-out 160. A cut-out 160 is formed in the base of the channel 90 in the track 62 in alignment with the projections 146 and 156 when the mechanism is in the position illustrated in Figure 7.

Figure 6 illustrates the roof with both panels 66 and 70 in their closed positions. The strut 120 is substantially horizontal, the pin 136 being at the rear end of the main arcuate slot 130 and the pin 128 at an intermediate position along its length. The first link 132 is held in place by engagement of the drive member 96 in the recess 144 while the second link 150, and, with it, the rear panel 70, is held in position by engagement of the projection 156 in the cut-out 160 in the track, disengagment being prevented by the drive member 96 which overlies the front end of the second link 150.

If it is desired to open the roof, the drive member 96 is moved rearwardly, pulling the first link 132 rearwardly by engagement with the rear edge of the recess 144. Although this rear edge is inclined, the downward component of force on the front link 132 is resisted by engagement of the projection 146 with the bottom of the channel 90 in the side member 62. Initial rearward movement of the first link 132 causes the pins 128 and 136 to move along the main arcuate slot 130, thereby lifting the rear edge of the front panel 66. By the time the pin 128 has reached the front end of the main arcuate slot, the pivot pin 122 has been raised to a sufficient extent for continued rearward movement of the link 132 to cause the strut 120 to pivot about the pin 128, thus continuing to raise the front panel 66. This movement continues until the strut 120 is vertical and the projection 146 on the first link 132 in alignment with the cut out 160 in the side member 62, as illustrated in Figure 7. The front panel 66 is now in its fully open position but the rear panel 70 remains fully closed.

During continued rearward movement of the drive member 96, engagement thereof with the inclined rear edges of the recesses 144 in the first link 132 causes the first link 132 to pivot downwardly, engaging its projection 146 in the cut-out 160. Simultaneously, engagement of the drive member 96 with the inclined rear edge of the recess 154 in the second link 150 causes the second link 150 to pivot upwardly, disengaging its projection 156 from the cut-out 160. Continued rearward movement of the drive member 96 causes a corresponding rearward movement of the rear panel 70, as illustrated in Figure 9.

The panels can be returned to their closed position by forward movement of the drive member 96.

It will be realised that, although the second link 158 remains in contact with the drive member 96 at all times, thereby preventing premature disengagement of the projection 156 from the cut-out 160, there is no corresponding positive retention of the projection 146 is the cut-out 160 when the drive member 96 is in the position illustrated in Figure 9. However, since the strut 120 is vertical at this time and the pivot pin 128 is directly above the point at which the front link 132 pivots to cause disengagement of the projection 146, forces on the front panel 66 cannot cause such disengagement and even if such disengagement occurs, cannot cause movement of the first link 132 along the track. Nevertheless, it will usually be preferable to provide spring means (not shown) for biasing the projection 146 into the cut-out 160. The ramp 142 ensures that partial disengagement cannot prevent the drive member 96 from returning to the recess 144 during closing movement.

As can best be seen in Figure 8, the rectangular channel 90 has a groove 162 in its inner side wall. A projection 164 on the first link, in alignment with the front end of the arcuate slot 128, and a similar projection (not shown) on the rear link 158, in alignment with the pivot pin 152, are received in this slot to prevent the front and rear panels from being lifted out bodily. The rear edge of the rear panel is supported on a conventional guide shoe which is received in the rectangular channel 90 and has a formation engaging in the side groove 162.

## Claims

1. An opening roof for a motor vehicle in which the front part of an opening (12) in the vehicle roof (10) is covered by a front panel (26, 66) which has side flanges extending downwardly from its side edges and is openable by pivoting upwardly about its front edge and the rest of the opening (12) is covered by a rear panel (24, 70) which has side flanges extending downwardly from its side edges and is openable by sliding, to a position behind the opening (12), along a pair of tracks (40, 62) located on opposite sides of the opening (12), characterised in that a water check flange (16, 64) is secured to the vehicle roof (10) so as to surround the entire periphery of the opening (12), side flanges on the front panel (26, 66) are part of a main flange (80) extending downwardly from its front and side edges so as to be below the top of the water check flange (16, 64) when the front panel is in its closed position, the side flanges on the rear panel (24, 70) are part of a main flange (34, 80) extending downwardly from its side and rear edges so as to project outside and below the top of the water check flange (16, 64), a front flange (42) projects downwardly from the front edge of the rear panel (24, 70) to a depth less than the depth of the main flange (34, 80) of the rear panel (24, 70) so as to extend over the water check flange (16, 64) adjacent to each front corner of the rear panel (24, 70), an upwardly facing U-shaped channel (42, 72) is formed on the bottom edge of the front flange of the rear panel (24, 70), and a rear flange (32, 74) extends downwardly from the rear edge of the front panel (26, 66) to a depth less than the depth of the main flange (80) of the front panel (26, 66) so that said rear flange (32, 74) is received in the U-shaped channel (44, 72) when both panels (26, 24; 66, 70) are in their closed positions.

2. An opening roof for a motor vehicle according to claim 1, wherein the tracks (40, 62) are mounted on the vehicle roof (10) laterally outside the water check flange (16, 64).

3. An opening roof for a motor vehicle according to claim 1 or 2, wherein each of the tracks (62) supports means for opening the panels comprising a drive member (96) movable along the track (62), a first link (132) coupled to means operative to open the front panel (66) as it slides along the track (62) and having a first coupling formation (144, 146) at its rear end movable between a first position in which it engages with a locking formation (160) on the track (62) and a second position in which it engages with the drive member (96), and a second link (150) coupled to slide along the track (62) with the rear panel (70) and having a second coupling formation (154, 156) at its front end movable between a first position in which it engages with a locking formation (160) on the track (62) and a second position in which it engages with the drive member (96), the first and second coupling formations (144, 146; 154, 156) being so shaped that the first coupling formation (144, 146) is disengaged from the drive member (96) and engaged with its locking formation (160) and the second coupling formation (154, 156) is disengaged from the drive member (96) and engaged with its locking formation (160) during rearward movement of the drive member (96), and the first coupling formation (144, 146) is disengaged from its locking formation (160) and engaged with the drive member (96) and the second coupling formation (154, 156) is disengaged from its locking formation (160) and engaged with the drive member (96) during forward movement of the drive member (96).

4. An opening roof for a motor vehicle according to claim 1, 2 or 3, characterised in that each of the tracks (62) supports means for opening the panels comprising a drive member (96) movable along the track, a first link (132) coupled to means operative to open the front panel (66) as it slides along the track (62) and having a first coupling formation (144, 146) at its rear end movable between a first position in which it engages with a locking formation (160) on the track (62) and a second position in which it engages with the drive member (96), and a second link (150) coupled to slide along the track (62) with the rear panel (70) and having a second coupling formation (154, 156) at its front end movable between a first position in which it engages with a locking formation (160) on the track (62) and a second position in which it engages with the drive member (96), the first and second coupling formations (144, 146; 154, 156) being so shaped that the first coupling formation (144, 146) is disengaged from the drive member (96) and engaged with its locking formation (160) and the second coupling formation (154, 156) is disengaged from the drive member (96) and engaged with its locking formation (160) during rearward movement of the drive member (96), and the first coupling formation (144, 146) is disengaged from its locking formation (160) and engaged with the drive member (96) and the second coupling formation (154, 156) is disengaged from its locking formation (160) and engaged with the drive member (96) during forward movement of the drive member (96).

5. An opening roof for a motor vehicle according to claim 3 or 4, wherein the second link (150) has a ramp on its front end arranged to engage with the drive member (96) to retain the second coupling formation (154, 156) in engagement with its locking formation (160) when the drive member (96) is in front of said locking formation (160).

6. An opening roof for a motor vehicle according to claim 3, 4 or 5, wherein a single locking formation (160) is provided on the track (62) and the first coupling formation (144, 146) is arranged to move out of engagement with the drive member (96) simultaneously with movement of the second coupling formation (154, 156) into engagement therewith.

7. An opening roof for a motor vehicle according to claim 3, 4, 5 or 6, wherein the means operative to open the front panel (66) comprises a strut (120) having one end (122) pivotally connected to the panel (66) and having a first pivot formation (128) at its other end engaging in an arcuate slot (130) in a side wall of the first link (132) and a second pivot formation (136) intermediate between the ends of the strut (120) engaging in the arcuate slot (130) so as to be at the front of the slot (130) when the first panel is in its closed position, rearward movement of the first link (132) causing the pivot formations (128, 136) to move along the arcuate slot (130) thereby pivoting the strut (120) relative to the track (62) so as to raise the rear edge of the panel (66), the arcuate slot (130) having an upwardly extending branch slot (134) aligned with the position of the second pivot formation (136) when the first pivot formation (128) is at the front end of the arcuate slot (130), the branch slot (134) permitting the second pivot formation (136) to disengage from the arcuate slot (130) as continued rearward movement of the first link (132) (132) causes continued pivotal movement of the strut (120) about the first pivot formation (128).

8. An opening roof for a motor vehicle according to claim 7, wherein the strut (120) has a cam formation (138) adjacent to the first pivot formation (128) arranged to engage with a complementary formation (140) on the first link (132) to retain the first pivot formation (128) at the front end of the arcuate slot (130) when the second pivot formation (136) is disengaged from both the arcuate slot (130) and the branch slot (134).

## Patentansprüche

1. Schiebedach für ein Kraftfahrzeug, bei dem der Vorderteil einer Öffnung (12) in dem Fahrzeugdach (10) von einer Vorderplatte (26, 66) abgedeckt ist, die Seitenflansche besitzt, welche sich von ihren Seitenkanten nach unten erstrecken, und die durch Hochschwenken an ihre Vorderkante zu öffnen ist, während der Rest der Öffnung (12) von einer Hinterplatte (24, 70) abgedeckt ist, die Seitenflansche besitzt, welche sich von ihren Seitenkanten aus nach unten erstrecken, und die durch Verschieben entlang einem Paar von Spuren (40, 62) auf einander entgegengesetzten Seiten der Öffnung (12) zu einer Stelle hinter der Öffnung (12) zu öffnen ist, **dadurch gekennzeichnet**, daß an dem Fahrzeugdach (10) ein Wasserrückhalteflansch (16, 64) derart befestigt ist, daß er den gesamten Umfang der Öffnung (12) angibt, Seitenflansche an der Vorderplatte (26, 66) Teil eines Hauptflansches (80) sind, der sich von ihrer Vorderkante und ihren Seitenkanten aus derart nach unten erstreckt, daß er unterhalb des Oberteils des Wasserrückhalteflansches (16, 64) liegt, wenn sich die Vorderplatte in ihrer geschlossenen Stellung befindet, die Seitenflansche an der Hinterplatte (24, 70) Teil eines Hauptflansches (34, 80) sind, der sich von ihren Seitenkanten und ihrer Hinterkante derart nach unten erstreckt, daß er außerhalb und unterhalb des Oberteils des Wasserrückhalteflansches (16, 64) vorsteht, ein Vorderflansch (42) von der Vorderkante der Hinterplatte (24, 70) bis zu einer Tiefe nach unten absteht, die geringer ist als die Tiefe des Hauptflansches (34, 80) der Hinterplatte (24, 70), an sich benachbart zu jeder vorderen Ecke der Hinterplatte (24, 70) über den Wasserrückhalteflansch (16, 64) zu erstrecken, an der Unterkante des Vorderflansches der Hinterplatte (24, 70) ein nach oben weisender U-förmiger Kanal (42, 72) ausgebildet ist, und sich ein Hinterflansch (32, 74) von der Hinterkante der Vorderplatte (26, 66) aus bis zu einer Tiefe nach unten erstreckt, die geringer ist als die Tiefe des Hauptflansches (80) der Vorderplatte (26, 66), so daß der Hinterflansch (32, 74) in dem U-förmigen Kanal (44, 72) aufgenommen wird, wenn sich beide Platten (26, 24; 66, 70) in ihrer geschlossenen Stellung befinden.

2. Schiebedach für ein Kraftfahrzeug nach Anspruch 1, bei dem die Spuren (40, 62) an dem Fahrzeugdach (10) seitlich außerhalb des Wasserrückhalteflansches (16, 64) angebracht sind.

3. Schiebedach für ein Kraftfahrzeug nach Anspruch 1 oder 2, bei dem jede der Spuren (62) eine Einrichtung zum Öffnen der Platten trägt, anfassend ein Antriebselement (96), welches entlang der Spur (62) bewegbar ist, ein erstes Verbindungsglied (132), welches an Mittel zum Öffnen der Vorderplatte (60) gekoppelt ist, wenn es entlang der Spur (42) gleitet, und eine erste Kupplungsausbildung (144, 146) an seinem hinteren Ende aufweist, welche beweglich ist zwischen einer ersten Stellung, in der sie mit einer Verriegelungsausbildung (160) an der Spur (62) in Eingriff tritt, und einer zweiten Stellung, in der sie mit dem Antriebselement (96) in Eingriff gelangt, und ein zweites Verbindungsglied (150), welches zur Verschiebung entlang der Spur (62) mit der Hinterplatte (70) gekoppelt ist und eine zweite Kupplungsausbildung (154, 156) an ihrem vorderen Ende aufweist, die beweglich ist zwischen einer ersten Stellung, in der sie in Eingriff mit einer Verriegelungsausbildung (160) an der Spur (62) gelangt, und einer zweiten Stellung, in der sie mit dem Antriebselement (96) in Eingriff tritt, wobei die erste und die zweite Kupplungsausbildung (144, 146; 154, 156) derart geformt ist, daß die erste Kupplungsausbildung (144, 146) sich von dem Antriebselement (96) löst und mit ihrer Verriegelungsausbildung (160) in Eingriff tritt, während die zweite Kupplungsausbildung (154, 156) sich von dem Antriebselement (96) löst und mit ihrer Kupplungsausbildung (160) in Eingriff tritt während der Rückwärtsbewegung des Antriebselementes (96), und die erste Kupplungsausbildung (144, 146) sich von ihrer Verriegelungsausbildung (160) löst und mit dem Antriebselement (96) in Eingriff tritt, während die zweite Kupplungsausbildung (154, 156) sich von ihrer Verriegelungsausbildung (160) löst und mit dem Antriebselement (96) in Eingriff tritt, während das Antriebselement (96) eine Vorwärtsbewegung vollzieht.

4. Schiebedach für ein Kraftfahrzeug nach Anspruch 1, 2 oder 3, **dadurch gekennzeichnet**, daß jede der Spuren (62) eine Einrichtung zum Öffnen der Platten aufweist, welche anfaßt: ein entlang der Spur bewegliches Antriebselement (96), ein erstes Verbindungsglied (132), welches an Mittel zum Öffnen der Vorderplatte (66) gekoppelt ist, wenn es entlang der Spur (62) gleitet, und welches eine erste Kupplungsausbildung (144, 146) an seinem hinteren Ende besitzt, die beweglich ist zwischen einer ersten Stellung, in der sie in Eingriff mit einer Verriegelungsausbildung (160) auf der Spur (62) tritt, und einer zweiten Stellung, in der sie mit dem Antriebselement (96) in Eingriff gelangt, und ein zweites Verbindungsglied (150), welches zur Verschiebung entlang der Spur (62) mit der Hinterplatte (70) gekoppelt ist und eine zweite Kupplungsausbildung (154, 156) an seinem Vorderende aufweist, die beweglich ist zwischen einer ersten Stellung, in der sie in Eingriff tritt mit einer Verriegelungsausbildung (160) an der Spur (62) und einer zweiten Stellung, in der sie in Eingriff mit dem Antriebselement (96) tritt, wobei die erste und die zweite Kupplungsausbildung (144, 146; 154, 156) derart geformt sind, daß die erste Kupplungsausbildung (144, 146) sich von dem Antriebselement (96) löst und in Eingriff mit ihrer Verriegelungsausbildung (160) tritt, und die zweite Kupplungsausbildung (154, 156) sich von dem Antriebselement (96) löst und in Eingriff mit ihrer Verriegelungsausbildung (160) tritt, während das Antriebselement (96) eine Rückwärtsbewegung vollzieht, und die erste Kupplungsausbildung (144, 146) sich von ihrer Verriegelungsausbildung (160) löst und mit dem Antriebselement (96) in Eingriff tritt, während die zweite Kupplungsausbildung (154, 156) sich von ihrer Verriegelungsausbildung (160) löst und mit dem Antriebselement (96) in Eingriff tritt, während das Antriebselement (96) eine Vorwärtsbewegung vollzieht.

5. Schiebedach für ein Kraftfahrzeug nach Anspruch 3 oder 4, bei dem das zweite Verbindungsglied (150) an seinem Vorderende eine Rampe aufweist, die derart ausgebildet ist, daß sie mit dem Antriebselement (96) in Eingriff tritt, an die zweite Kupplungsausbildung (154, 156) in Eingriff mit ihrer Verriegelungsausbildung (160) zu halten, wenn das Antriebselement (96) sich vor der Verriegelungsausbildung (160) befindet.

6. Schiebedach für ein Kraftfahrzeug nach Anspruch 3, 4 oder 5, bei dem auf der Spur eine einzige Verriegelungsausbildung (160) vorgesehen ist und die erste Kupplungsausbildung (144, 146) derart ausgebildet ist, daß sie sich aus dem Eingriff mit dem Antriebselement (96) zur gleichen Zeit löst, zu der sich die zweite Kupplungsausbildung (154, 156) in den Eingriff mit diesem bewegt.

7. Schiebedach für ein Kraftfahrzeug nach Anspruch 3, 4, 5 oder 6 bei dem die Mittel zum Öffnen der Vorderplatte (66) aufweisen: eine Strebe (120), deren eines Ende (122) schwenkbar mit der Platte (66) verbunden ist und eine erste Schwenkausbildung (128) an ihrem anderen Ende aufweist, welche in einen bogenförmigen Schlitz (130) in einer Seitenwand des ersten Verbindungsgliedes (132) eingreift, sowie eine zweite Schwenkausbildung (136) zwischen den Enden der Strebe (120) aufweist, welche in den bogenförmigen Schlitz (130) eingreift, an vorne in dem Schlitz (130) zu liegen, wenn sich die erste Platte in ihrer geschlossenen Stellung befindet, wobei eine Rückwärtsbewegung des ersten Verbindungsgliedes (132) die Schwenkausbildungen (128, 136) veranlaßt, sich entlang dem bogenförmigen Schlitz (130) zu bewegen und dabei die Strebe (120) relativ zu der Spur (62) zu verschwenken und so die Hinterkante der Platte (66) anzuheben, wobei der bogenförmige Schlitz (130) einen sich nach oben erstreckenden Verzweigungsschlitz (134) besitzt, der mit der Lage der zweiten Schwenkausbildung (136) ausgerichtet ist, wenn die erste Schwenkausbildung (128) sich am vorderen Ende des bogenförmigen Schlitzes (130) befindet, so daß der Verzweigungsschlitz (134) ermöglichst, daß sich die zweite Schwenkausbildung (136) aus dem bogenförmigen Schlitz (130) löst, wenn eine fortgesetzte Rückwärtsbewegung des ersten Verbindungsgliedes (132) eine fortgesetzte Schwenkbewegung der Strebe (120) an die erste Schwenkausbildung (128) veranlaßt.

8. Schiebedach für ein Kraftfahrzeug nach Anspruch 7, bei dem die Strebe (120) neben der ersten Schwenkausbildung (128) eine Steuerkurvenausbildung (138) aufweist, die derart ausgebildet ist, daß sie mit einer komplementären Ausbildung (140) an dem ersten Verbindungsglied (132) in Eingriff tritt, an die erste Schwenkausbildung (128) am vorderen Ende des bogenförmigen Schlitzes (130) zu halten, wenn die zweite Schwenkausbildung (136) sich sowohl von dem bogenförmigen Schlitz (130) als auch dem Verzweigungsschlitz (134) löst.

## Revendications

1. Un toit ouvrant pour véhicule automobile, dans lequel la partie avant d'une ouverture (12) dans le pavillon du véhicule (10) est recouverte par un panneau avant (26, 66) muni de brides latérales dirigées vers le bas à partir de ses bords latéraux et pouvant être ouvert par une rotation vers le haut autour de son bord avant, et le reste de l'ouverture (12) est recouvert par un panneau arrière (24, 70) muni de brides latérales dirigées vers le bas à partir de ses bords latéraux et pouvant être ouvert par glissement, jusque dans une position située en arrière de l'ouverture (12), le long d'une paire de rails (40, 62) montés sur les côtés opposés de l'ouverture (12), caractérisé en ce qu'une bride formant larmier (16, 64) est fixée sur le pavillon du véhicule (10) de manière à entourer toute la périphérie de l'ouverture (12), les brides latérales du panneau avant (26, 66) faisant partie d'une bride principale (80) dirigée vers le bas à partir de ses bords avant et latéraux, de manière à se trouver au dessous du sommet de la bride formant larmier (16, 64) lorsque le panneau avant est en position fermée, les brides latérales du panneau arrière (24, 70) faisant partie d'une bride principale (34, 80) dirigée vers le bas à partir de ses bords arrière et latéraux, de manière à dépasser en saillie vers l'extérieur et au dessous du haut de la bride formant larmier (16, 64), une bride avant (42) étant dirigée en saillie vers le bas à partir du bord avant du panneau arrière (24, 70) jusqu'à un niveau inférieur au niveau de la bride principale (34, 80) du panneau arrière (24, 70), de manière à se prolonger sur la bride formant larmier (16, 64) à proximité de chaque angle avant du panneau arrière (24, 70), un canal en U tourné vers le haut (42, 72) étant ménagé sur le bord inférieur de la bride avant du panneau arrière (24, 70), et une bride arrière (32, 74) s'étendant vers le bas à partir du bord arrière du panneau avant (26, 66) jusqu'à un niveau inférieur au niveau de la bride principale (80) du panneau avant (26, 66), de manière que ladite bride arrière (32, 74) vienne se loger dans le canal en U (44, 72) lorsque les deux panneaux (26, 24; 66, 70) sont en position fermée.

2. Un toit ouvrant pour véhicule automobile selon la revendication 1, dans lequel les rails (40, 62) sont montés sur le pavillon du véhicule (10), latéralement à l'extérieur de la bride formant larmier (16, 64).

3. Un toit ouvrant pour véhicule automobile selon la revendication 1 ou 2, dans lequel chaque rail (62) supporte des moyens d'ouverture des panneaux comprenant un élément de commande ou de manoeuvre (96) mobile le long du rail (62), une première articulation (132) accouplée à des moyens de commande d'ouverture du panneau avant (66) lorsqu'il glisse le long du rail (62) et comprenant un premier bossage d'accouplement (144, 146) à son extrémité arrière, mobile entre une première position, dans laquelle il vient en prise sur un bossage formant verrou (160) du rail (62) et une seconde position dans laquelle il vient en prise sur l'élément de commande (96), et une seconde articulation (150) accouplée de manière à glisser le long du rail (62) avec le panneau arrière (70) et comportant un second bossage d'accouplement (154, 156) à son extrémité avant, mobile entre une première position dans laquelle elle vient en prise sur un bossage formant verrou (160) du rail (62) et une seconde position, dans laquelle elle vient en prise sur l'élément de commande (96), les premier et second bossages d'accouplement (144, 146; 154, 156) étant conformés de manière que le premier bossage d'accouplement (144, 146) soit dégagé de l'élément de commande (96) et engagé en prise sur son bossage formant verrou (160), et que le second bossage d'accouplement (154, 156) soit dégagé de l'élément de commande (96) et engagé en prise sur son bossage formant verrou (160) pendant le déplacement vers l'arrière de l'élément de commande (96), et que le premier bossage d'accouplement (144, 146) soit dégagé de son bossage formant verrou (160) et engagé en prise sur l'élément de commande (96) et que le second bossage d'accouplement (154, 156) soit dégagé de son bossage formant verrou (160) et engagé en prise sur l'élément de commande (96) pendant le déplacement vers l'avant de l'élément de commande (96).

4. Un toit ouvrant pour véhicule automobile selon la revendication 1, 2 ou 3, caractérisé en ce que chaque rail (62) supporte des moyens d'ouverture des panneaux comprenant un élément de commande ou de manoeuvre (96) mobile le long du rail, une première articulation (132) accouplée à des moyens de commande pour ouvrir le panneau avant (66) pendant son glissement sur le rail (62) et comprenant un premier bossage d'accouplement (144, 146) à son extrémité arrière, mobile entre une première position dans laquelle elle vient en prise sur un bossage formant verrou (160) du rail (62) et une seconde position dans laquelle elle vient en prise sur l'élément de commande (96), et une seconde articulation (150), accouplée de manière à glisser sur le rail (62) avec le panneau arrière (70) et comprenant un second bossage d'accouplement (154, 156) à son extrémité avant, mobile entre une première position, dans laquelle elle vient en prise sur un bossage formant verrou (160) du rail (62) et une seconde position, dans laquelle elle vient en prise sur l'élément de commande (96), les premier et second bossages d'accouplement (144, 146; 154, 156) étant conformés de manière que le premier bossage d'accouplement (144, 146) soit dégagé de l'élément de commande (96) et engagé en prise sur son bossage formant verrou (160) et le second bossage d'accouplement (154, 156) soit dégagé de l'élément de commande (96) et engagé en prise sur son bossage formant verrou (160) pendant le déplacement vers l'arrière de l'élément de commande (96) et que le premier bossage d'accouplement (144, 145) soit dégagé de son bossage formant verrou (160) et engagé en prise sur l'élément de commande (96) et que le second bossage d'accouplement (154, 156) soit dégagé de son bossage formant verrou (160) et engagé en prise sur l'élément de commande ou de manoeuvre (96) pendant le déplacement vers l'avant de l'élément de commande ou de manoeuvre (96).

5. Un toit ouvrant pour véhicule automobile selon la revendication 3 ou 4, dans lequel une seconde articulation (150) est pourvue d'une rampe sur son extrémité avant, agencée pour venir en prise sur l'élément de commande ou de manoeuvre (96), pour retenir le second bossage d'accouplement (154, 156) en prise sur son bossage formant verrou (160) lorsque l'élément de commande ou de manoeuvre (96) est en face dudit bossage formant verrou (160).

6. Un toit ouvrant pour véhicule automobile selon la revendication 3, 4 ou 5, dans lequel un seul bossage formant verrou (160) est ménagé sur le rail (62), et le premier bossage d'accouplement (144, 146) est agencé pour sortir de prise de l'élément de commande (96) simultanément avec le déplacement du second bossage d'accouplement (154, 156) en prise avec celui-ci.

7. Un toit ouvrant pour véhicule automobile selon la revendication 3, 4, 5 ou 6, dans lequel les moyens de commande d'ouverture du panneau avant (66) comprennent une biellette (120) dont une extrémité (122) est montée à rotation sur le panneau (66) et pourvue d'un premier bossage formant pivot (128) à son autre extrémité, venant en prise dans une fente arquée (130) dans une paroi latérale de la première articulation (132) et un second bossage formant pivot (136), intermédiaire entre les extrémités de la biellette (120), venant en prise dans la fente arquée (130) de manière à se trouver à l'avant de la fente (130) lorsque le premier panneau est en position fermée, le déplacement vers l'arrière de la première articulation (132) provoquant le déplacement des bossages formant pivot (128, 136) le long de la fente arquée (130), de manière à faire ainsi pivoter la biellette (120) par rapport au rail (62) afin de soulever le bord arrière du panneau (66), la fente arquée (130) comprenant une fente de bifurcation dirigée vers le haut (134) dans l'alignement de la position du second bossage formant pivot (136) lorsque le premier bossage formant pivot (128) est à l'extrémité avant de la fente arquée (130), la fente de bifurcation (134) permettant au second bossage formant pivot (136) de se dégager de la fente arquée (130) lorsque la poursuite du déplacement vers l'arrière de la première articulation (132) provoque la poursuite du mouvement de rotation de la biellette (120) autour du premier bossage formant pivot (128).

8. Un toit ouvrant pour véhicule automobile selon la revendication 7, dans lequel la biellette (120) est pourvue d'un bossage en forme de came (138) adjacent au premier bossage formant pivot (128), agencé pour venir en prise sur un bossage complémentaire (140) de la première articulation (132) pour retenir le premier bossage formant pivot (128) à l'extrémité avant de la fente arquée (130) lorsque le second bossage formant pivot (136) est dégagé, à la fois, de la fente arquée (130) et de la fente de bifurcation (134).
